# EUROPÄISCHE PATENTSCHRIFT

(11) **EP 2 589 991 B1**
(45) Veröffentlichungstag und Bekanntmachung des Hinweises auf die Patenterteilung: **14.11.2018**
(21) Anmeldenummer: 12173708.4
(22) Anmeldetag: 26.06.2012
(51) Int. Cl.: G01V 8/20, B61D 19/02, E06B 7/23, F16P 3/14, E05F 15/43

(54) **Sicherheitsprofilleiste mit Lichtgitter**
Safety profile strip with light grid
Barrette profilée de sécurité dotée d'une grille lumineuse

(30) Priorität: 03.08.2011 DE 202011050895 U
(43) Veröffentlichungstag der Anmeldung: 08.05.2013
(73) Patentinhaber: Gummi-Welz GmbH u. Co. KG Gummi-Kunststofftechnik-Schaumstoffe, 89231 Neu-Ulm (DE)
(72) Erfinder: Grein, Horst, 34637 Schrecksbach (DE)
(74) Vertreter: Ter Meer Steinmeister & Partner

(56) Entgegenhaltungen:
- EP-A2- 1 231 348
- DE-A1- 2 658 660
- DE-B3-102010 005 132
- DE-U1- 9 418 117
- DE-U1-202005 016 606

## Beschreibung

Die Erfindung betrifft eine Sicherheitsprofilleiste mit Lichtgitter.

Gummielastische Profilleisten werden bei Türen, Toren, etc. vielfach als Sicherheitseinrichtungen gegen das Einklemmen von beispielsweise Fingern, Armen und auch Gegenständen eingesetzt. Zur Feststellung eines Einklemmereignisses dienen häufig an Luftkammern angeschlossene Druckwellenschalter und elektrische Schaltleisten, die bedarfsweise einen Reversiervorgang einleiten. Es kommen auch Lichtschranken anstelle der Schaltleisten im Profilkanal zum Einsatz.

Zusätzlich zu solchermaßen ausgestatteten Sicherheitsprofilleisten werden oft bei Personentransportmitteln Lichtschranken oder Lichtgitter eingesetzt. Diese werden auf dem Türblatt, in der Nähe der Hauptschließkante, neben der Tür, in oder auf der Fahrzeuginnenverkleidung oder an Haltestangen montiert. Hierbei sind nur eingeschränkte Montagemöglichkeiten gegeben. Die Fahrgäste, die die Lichtschranken erkennen, lösen diese öfter aus, um zu verhindern, dass die Tür geschlossen wird. Hierdurch kommt es zu verspäteter Abfahrt des Transportmittels und sich daraus ergebenden Störungen des Betriebsablaufs.

Bei einer Einrichtung zur Türschließüberwachung in Nahverkehrsfahrzeugen gemäß der DE 24 32 063 C3 beispielsweise sind eine Strahlungsquelle und ein Sensor einer Lichtschranke oberhalb der Tür angeordnet. Vor den Tür-Dichtlippen befinden sich elastische Abdeckelemente, die den vor den Dichtlippen geführten Lichtstrahl abdecken. Innerhalb der Abdeckelemente oder in der Türschwelle ist ein Reflektor angeordnet. Im Einklemmfall verformen sich die Abdeckelemente und der Lichtstrahl wird wie bei den oben erwähnten Lichtschranken unterbrochen.

Eine ähnliche Lichtschrankenanordnung wird in der DE 94 18 117 U1 vorgeschlagen. In eine Hohlkammer einer gummielastischen Profilleiste wird eine Lichtschranke eingebaut. Befindet sich ein Gegenstand im Türspalt, wird die innere Hohlkammer bei fortschreitender Schließbewegung eingedrückt und hierdurch der Lichtstrahl unterbrochen. Dies löst ein Anhalten und/oder Reversierung des Türschließvorgangs aus.

In der DE 10 2007 038 421 B3 ist eine Sicherheitsvorrichtung zum Überwachen einer automatischen Tür beschrieben, bei der eine Sendeeinheit zum Aussenden von Licht am Türblatt der zu überwachenden Tür angebracht ist. In der Nähe befindet sich eine Empfängereinheit für reflektiertes oder gestreutes Licht. Es ist vorgesehen, abhängig von der Position des Türblatts den Überwachungsbereich anzupassen.

Bei einem aus der DE 36 01 890 A1 bekannten Beschlag für Glastüren sind parallel zum Türflügel zwei Schenkel vorhanden, die einen Hohlraum abschließen. In diesem können gegebenenfalls Elemente einer Lichtschranke als Teil der Türsteuerung untergebracht werden, mit deren Hilfe der betreffende Türflügel solange offengehalten wird, wie sich eine Person in der Ebene der geöffneten Tür aufhält.

Die DE 10 2009 056 243 A1 offenbart eine Anordnung zur Sensorüberwachung einer Schwenkschiebetür, an deren Schließkante stirnseitig ein von unten nach oben laufendes Sensorelement zur Detektion einer Klemmung angeordnet ist. Zusätzlich ist innenseitig des Sensorelements, getrennt von diesem ein von unten nach oben laufendes Dichtelement angeordnet. Das Gehäuse des Sensorelements besteht vorzugsweise aus einem elastischen Material, das bei Druckbeaufschlagung komprimiert wird und anschließend wieder die alte Form annimmt. Bei dem Sensorelement kann es sich um nach dem Lichtschrankenprinzip arbeitende Sensoren handeln.

DE 20 2005 016 606 U1 offenbart ein Einfassprofil für eine optoelektronische Sensoreinrichtung, bei der das Einfassprofil ein Strangprofil der Sensoreinrichtung mit Ausnahme einer spaltförmigen Öffnung im Bereich der Frontscheibe vollständig formschlüssig umschließt.

EP 1 231 348 A2 offenbart eine Sicherheitsvorrichtung zum Anhalten motorische bewegter Gegenstände, bei dem eine elastisch verformbare Kammer zur Aufnahme einer Signaleinrichtung vorgesehen ist, mittels der einer Verformung der Kammer erfassbar ist.

DE 26 58 660 A1 offenbart eine Sicherheitsvorrichtung an automatisch schließenden Schiebetüren, bei der parallel zu und innerhalb einer Gummileiste ein Lichtstrahl einer Lichtschranke derart verläuft, dass er bei der Verformung der Leiste, zumindest teilweise, unterbrochen wird.

DE 10 2010 005 132 B3 offenbart eine Lichtgitterleiste einer Lichtgittervorrichtung, bei der eine Elektronikeinheit über eine Strahlungsöffnung in ein Leistengehäuse einsetzbar ist.

Der Erfindung liegt die Aufgabe zugrunde, eine Anordnung zu schaffen, die den Einbau eines Lichtgitters an einer Sicherheitseinrichtung mit wenig Teileaufwand und geringen Montagekosten ermöglicht.

Diese Aufgabe ist durch die Merkmale der unabhängigen Ansprüche gelöst. Vorteilhafte Weiterbildungen der erfindungsgemäßen Sicherheitsprofilleiste sind Gegenstand der Unteransprüche.

Eine Sicherheitsprofilleiste gemäß der Erfindung umfasst somit ein gummielastisches Dichtungsprofil mit einem Profilfuß, einer ersten Außenseite, einer zweiten Außenseite sowie einer Stirnseite. Im Dichtungsprofil ist eine Kammer zur Aufnahme einer Lichtgitterleiste (Sender- und/oder Empfängerleiste oder Reflektorleiste) ausgespart. Auf der Stirnseite der Kammer sind Öffnungen für den Durchtritt von Lichtstrahlen von oder zu der Lichtgitterleiste vorgesehen.

Die jeweils eingesetzten Lichtgitterleisten sind durch den Lichtgittertyp bestimmt. Es kann sich um ein Lichtgitter handeln, das auf der einen Seite Sendermittel und auf der anderen Seite Empfängermittel aufweist. Alternativ können aber auch Sender- und Empfängermittel in derselben Lichtleiste untergebracht sein. Dann ist ihnen gegenüber eine Reflektoreinrichtung angeordnet. Durch den Einsatz eines Lichtgitters, d.h. eines optischen Detektionsmittels, direkt im Gefahrenbereich (Schließbereich der Tür) können Einklemmereignisse berührungslos und ohne jeglichen Zeitverlust erfasst werden. Da das ohnehin vorhandene Dichtungsprofil für den Einbau einer Lichtgitterleiste ausgerüstet wird, entfallen ansonsten zusätzlich benötigte Bauteile zur Halterung der Lichtgitterleiste. Diese wird lediglich in das Dichtungsprofil eingeschoben und ist in der Kammer fest gehaltert. Sie kann unauffällig eingebaut werden und fügt sich harmonisch in das Türsystem ein. Aufgrund der integrierten und weitgehend verborgenen Montage im Dichtungsprofil sind die Manipulationsmöglichkeiten und die Vandalismusgefahr deutlich reduziert, denn insbesondere bei geschlossener Tür ist das Vorhandensein eines Lichtgitters für den Fahrgast nicht erkennbar. Durch die Flexibilität des Gummiprofils stört die eingebaute Lichtgitterleiste nicht.

Die Lichtgitterleiste und die zugehörigen Empfänger- oder Reflektormittel - je nach Lichtgittertyp - können im Fall einer zweiflügeligen Tür in den beiden Türdichtungsprofilen der Hauptschließkante untergebracht sein. Bei einer einflügeligen Tür befindet sich die Lichtgitterleiste entweder im Türdichtungsprofil oder im Portal. Entsprechend ist dann das Portal oder die Tür mit den zugehörigen Empfänger- oder Reflektormitteln versehen.

Ist die Sicherheitsprofilleiste z.B. bei einem vertikal laufenden Rolltor an der Schließkante angebracht, können die Empfänger- oder Reflektormittel im Boden untergebracht sein. Im Fall einer abzusichernden Maschine kann sich ein Teil des Lichtgitters entsprechend im Gehäuse befinden.

Insbesondere im Fall, dass die Sicherheitsprofilleiste für Personentransportfahrzeuge vorgesehen ist, kann diese in üblicher Weise zusätzlich mit beispielsweise einer elektrischen Schaltleiste oder einer Druckwellenkammer ausgestattet sein.

Bei einer vorteilhaften Ausführungsform der erfindungsgemäßen Sicherheitsprofilleiste hat die Kammer einen Querschnitt entsprechend der Außenkontur der Lichtgitterleiste. Wenn die Lichtgitterleiste in die Kammer eingeschoben ist, hat sie einen festen Sitz.

Wenn die Sicherheitsprofilleiste bei einer zweiflügeligen Tür eingesetzt wird, kann gemäß der Erfindung in der Profilleiste eines Türflügels eine Lichtgitterleiste (Sender- und/oder Empfängerleiste oder Reflektorleiste) und in der Profilleiste der anderen Tür (Gegenprofil) die jeweils andere Leiste des Lichtgitters (Empfänger-, Reflektor- oder Senderleiste) untergebracht sein.

Bei Einsatz in einem einflügeligen Tür- oder einem Torsystem sind zweckmäßig eine Lichtgitterleiste (Sender- und/oder Empfängerleiste oder Reflektorleiste) im Dichtungsprofil der Tür und die jeweils andere Leiste des Lichtgitters (Empfänger-, Reflektor- oder Senderleiste) im Portal bzw. dem Dichtungsprofil gegenüber, z.B. in einem Maschinenkörper oder einer Wand, im Boden, etc. angeordnet.

Die Lichtgitterleiste muss sich nicht über die gesamte Länge des Dichtungsprofils erstrecken. So finden bei öffentlichen Verkehrsmitteln Einklemmereignisse im mittleren und unteren Bereich der Türen statt. Es kann auch sein, dass es im Falle einer Maschinenabsicherung nur in bestimmten Bereichen eines Profils zum Einklemmen von Fingern etc. kommen kann. Die Lichtgitterleiste kann so bereichsweise im Dichtungsprofil vorgesehen werden, ohne dass die Sicherheitsfunktion beeinträchtigt ist. Die Kosten sind hierdurch erheblich gesenkt.

Die Ausführung kann so gewählt werden, dass sich die Lichtgitterleiste über einen Teil der Längenerstreckung des Dichtungsprofils erstreckt. Die Lichtgitterleiste kann auch in mehrere Teilabschnitte aufgeteilt sein.

In dem (den) Bereich(en) ohne Lichtgitterleiste ist die Kammer des Dichtungsprofils bei einer Ausführung der Sicherheitsprofilleiste gemäß der Erfindung mit einem Kern, insbesondere Gummikern, gefüllt. Dies ermöglicht eine exakte Positionierung der Lichtleiste(nabschnitte) bei zugleich einfacher Montage. Der Kern entspricht zweckmäßig der Gestalt der Lichtleiste, ist also quasi eine Dummy-Lichtleiste und wird ebenfalls wie diese in das Dichtungsprofil eingeschoben.

Wenn die Öffnungen in der Stirnwand des Dichtungsprofils lediglich im Bereich der Lichtleiste vorgesehen sind, wird diese noch unauffälliger. Die Öffnungen können dabei beliebige Gestalt, etwa die Form eines Langlochs, Ellipsenform, haben und durch Bohrung, Stanzen, etc. in der Profilstirnwand vorgesehen werden.

Bei einer vorteilhaften Ausführung der erfindungsgemäßen Sicherheitsprofilleiste ist eine Seitenwand der Kammer zum Inneren des Dichtungsprofils durch flexible Lippen gebildet, die in das Innere der Kammer ragen. Die flexiblen Lippen ermöglichen ein leichtes Einschieben der Lichtgittermodule bzw. Leisten bei der Montage. Außerdem ist das Dichtungsprofil beweglicher, als dies der Fall bei einer starren Einhausung der Lichtgitterleiste wäre. Bei einem Einklemmen kann sich das Profil besser verformen und so z.B. zuverlässiger und früher eine Druckwelle oder Schaltleiste in einem Hohlkanal auslösen.

Ein zusätzlicher Sichtschutz für die Lichtleiste kann geschaffen werden, indem eine Lippe vor der Kammer außerhalb des Strahlengangs angeordnet wird. Zweckmäßig ist die Lippe schräg gestellt.

Die Erfindung wird im folgenden weiter anhand eines Ausführungsbeispiels und der Zeichnung beschrieben. Diese Darstellung dient lediglich zur Veranschaulichungszwecken und soll die Erfindung nicht auf die konkret angegebenen Merkmalskombinationen einschränken. Es zeigen
- Fig. 1: eine schematische Ansicht einer Lichtgitter-Anordnung,
- Fig. 2: eine schematische Draufsicht auf zwei zusammenwirkende Sicherheitsprofilleisten, die sich an zwei Türflügeln befinden und zur Aufnahme von Lichtgitterleisten ausgebildet sind, wobei mit anderen Funktionen im Zusammenhang stehende Profildetails bei dieser Darstellung fortgelassen sind,
- Fig. 3: eine Teilschnittansicht der Sicherheitsprofilleisten von Fig. 2, die die eingebauten Lichtgitterleisten zeigt,
- Fig. 4: eine Draufsicht auf eine Lichtgitterleiste,
- Fig. 5: eine Teillängsschnittansicht einer Sicherheitsprofilleiste, die deren Einbau im Dichtungsprofil veranschaulicht, und
- Fig. 6: eine Vorderansicht einer Sicherheitsprofilleiste, die die Abdeckung der Lichtgitterleiste durch eine Lippe veranschaulicht.

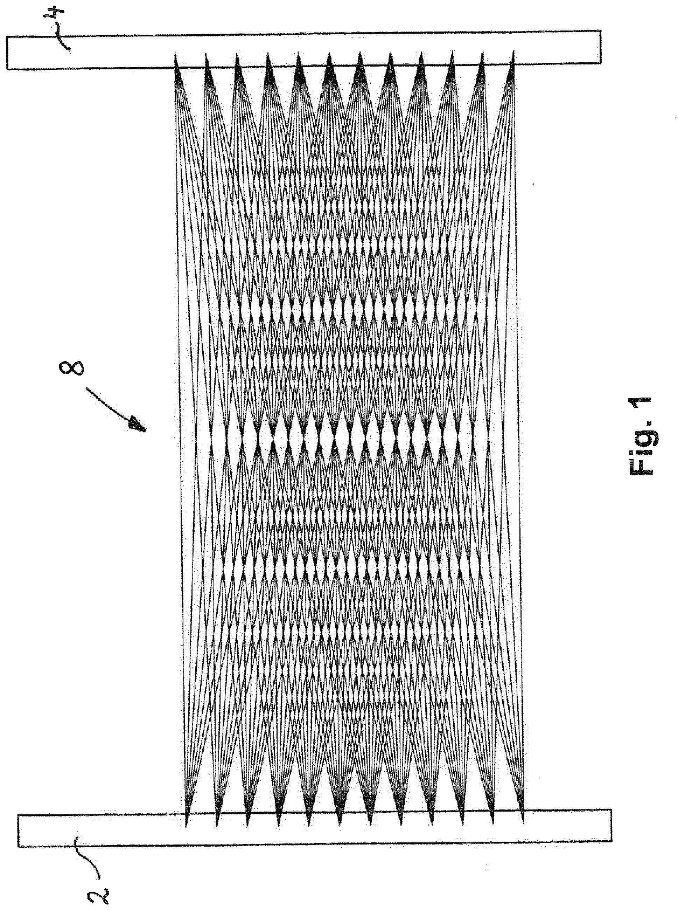

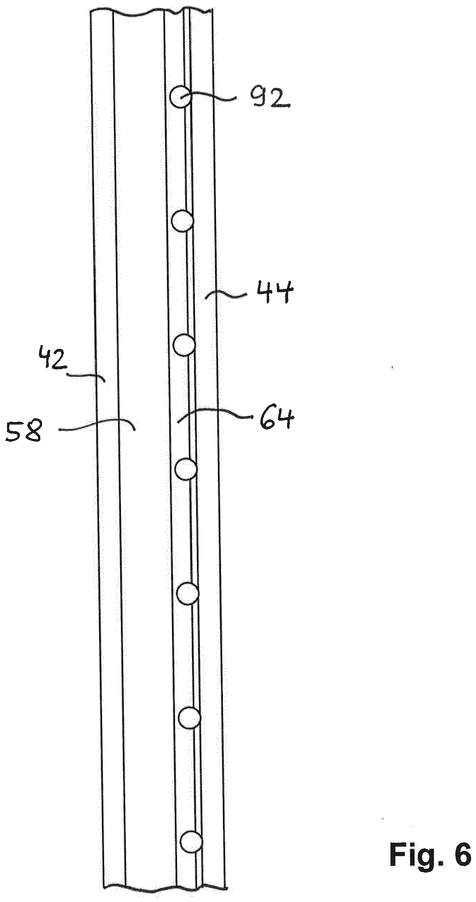

Fig. 1 veranschaulicht schematisch eine Lichtgitter-Anordnung zur berührungslosen Überwachung von Türen. Ihr Aufbau ist herkömmlicher Art und derartige Lichtgitterleisten werden an Türen in Fahrzeugen für den Personentransport eingesetzt. Die Lichtgitterleisten können jeweils eine Sender- und Empfängerleiste oder eine kombinierte Sender-Empfängerleiste und eine Reflektorleiste sein. In Fig. 1 gezeigt ist eine Ausführung mit je einer Sender- und einer Empfängerleiste 2, 4. Die beiden Lichtgitterleisten 2, 4 sind an den Stirnseiten mit beabstandeten Öffnungen 6 versehen, durch die ausgesendete Lichtstrahlen oder ankommende Lichtstrahlen treten (siehe Fig. 6). Die parallelen und sich kreuzenden Lichtstrahlen bilden zwischen den Lichtgitterleisten 2, 4 ein Lichtgitter 8. Gelangt eine Person oder ihr Gepäck, Kleidung oder dergleichen in den Bereich des Lichtgitters, wenn sich die Türen schließen, werden einige der Lichtstrahlen unterbrochen. Ein entsprechendes Meldesignal wird an die Türsteuerung weitergeleitet und löst ein Reversieren der Türschließbewegung aus. Bei offener Tür wird das Schließsignal unterdrückt.

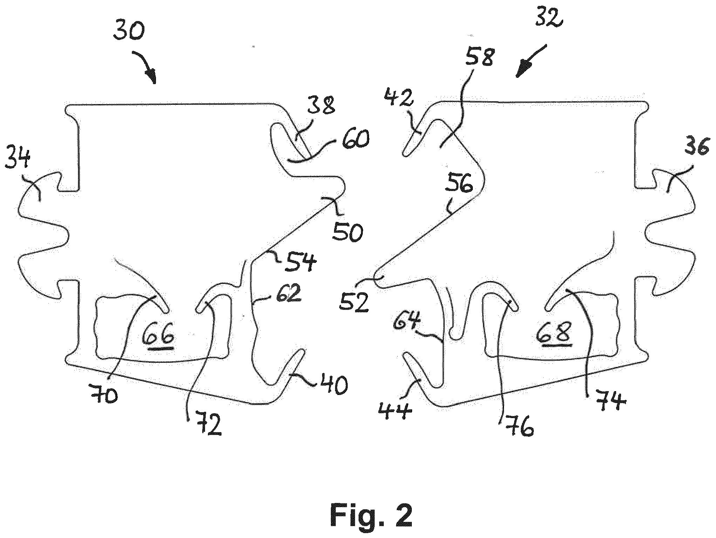

In Fig. 2 ist in einer Draufsicht die Anordnung von Lichtgitterleisten in Sicherheitsprofilleisten 30, 32 gemäß der Erfindung dargestellt, die an den Stirnseiten von zwei Türflügeln angebracht sind. Die Sicherheitsprofilleisten werden im Folgenden näher beschrieben, wobei jedoch Teile des Aufbaus, die nicht mit den Lichtgitterleisten und deren Funktion im Zusammenhang stehen, nicht weiter dargestellt sind und auch nicht erläutert werden. Es handelt sich hierbei z.B. um zusätzlich vorhandene elektrische Sensoren wie elektrische Schaltleisten oder mechanische Sensoren wie Druckwellenschalter, deren Anordnungs- und Auslösemerkmale, die von denen der Lichtgitterleisten entkoppelt sind.

Die Sicherheitsprofilleisten 30, 32 umfassen beim dargestellten Ausführungsbeispiel Dichtungsprofile aus gummielastischem Material und sind mittels eines Profilfußes 34, 36 in zugehörigen Ausnehmungen und Halterungsvorsprüngen eines Türprofils befestigbar. An der dem Profilfuß 34, 36 gegenüberliegenden Stirnseite befindet sich jeweils seitlich eine Dichtlippe 38, 40 bzw. 42, 44, die von der Profilaußenseite schräg nach vorne und innen absteht. Von der Stirnseite erstreckt sich eine in zwei Richtungen bewegliche Lippe 50, 52 fort, deren Fuß sich in die Stirnseite erweitert. Der stirnseitige Wandungsverlauf der beweglichen Lippe 50, 52 ist auf der der Dichtlippe 40, 42 zugewandten Seite geradlinig und geradlinig fortgesetzt, siehe Bezugszeichen 54, 56. Die Stirnseite des Dichtprofils der Sicherheitsprofilleiste 32 ist auf diese Weise zurückgesetzt, wobei durch die Dichtlippe 42 ein Raum 58 begrenzt ist. Gegenüberliegend setzt sich die Dichtlippe 50 in einer gebogenen, leicht zurückgesetzten Stirnseitenkontur fort und bildet zusammen mit der Dichtlippe 38 einen Raum 60. Auf der anderen Seite schließt sich an die Dichtlippe 50 und deren Fortsetzung 54 ein im Wesentlichen gerade verlaufender Wandbereich 62 an, der zur Profilaußenseite etwas vorgebogen ist und durch die Dichtlippe 40 abgeschlossen wird. Gegenüberliegend erstreckt sich ebenfalls zwischen der Dichtlippe 52 und der Dichtlippe 44 ein im Wesentlichen gerade verlaufender Wandbereich 64, den die Dichtlippe 44 ebenfalls abschließt.

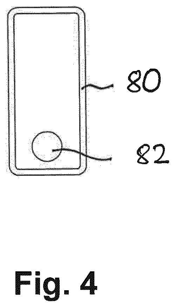

Im Inneren sind die Dichtprofile der Außenkontur der Lichtgitterleiste angepasst und somit mit annähernd rechteckförmigen Hohlkammern 66, 68 versehen. Zum Profilinneren sind statt der ansonsten durchgehenden Wandungen jeweils zwei flexible Lippen 70, 72; 74, 76 vorgesehen, die im Ruhezustand in das Innere der Kammern 66, 68 vorstehen. Zur Stirnseite der Dichtprofile hin stellen die im Wesentlichen gerade verlaufenden Wandbereiche 62, 64 die Kammerwandungen dar. Die Kammern 66, 68 dienen zur Aufnahme von Lichtgitterleisten 80, von den in Fig. 4 eine in Draufsicht dargestellt ist. Mit 82 ist ein Sender oder Empfänger bezeichnet.

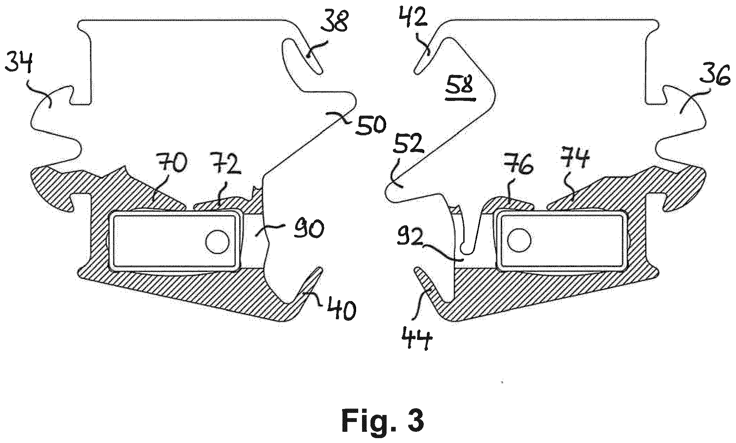

In Fig. 3 sind die Dichtprofile mit eingebauten Lichtgitterleisten 80 gezeigt. Der Schnitt von Fig. 3 ist so gelegt, dass er in Höhe von einer Öffnung 6 der Lichtgitterleiste 80 verläuft. In dieser Höhe befinden sich auch entsprechende Durchtrittsöffnungen 90, 92 der Wandbereiche 62, 64 der Profilstirnwand, die ein Austreten und Eintreten von Lichtstrahlen aus und in die Lichtgitterleiste ermöglichen.

Die Abdeckung der Durchtrittsöffnungen 92 durch die Dichtlippe 44 ist in Fig. 6 verdeutlicht. Von der Seite her sind die Durchtrittsöffnungen 92 praktisch nicht zu sehen.

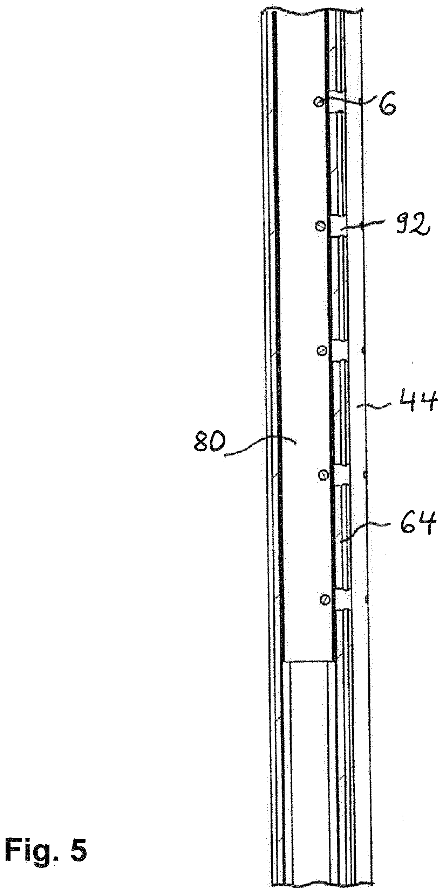

Fig. 5 veranschaulicht die Tiefe des Einbaus der Lichtgitterleisten 80 im Dichtprofil und die Anordnung der Durchtrittsöffnungen 92. Es ist auch gezeigt, dass die Lichtgitterleisten 80 nicht durchgehend lang wie das Dichtprofil sind. Unterhalb der Lichtgitterleiste 80 kann z.B. ein Gummikern gleicher Abmessungen in die Kammer 68 eingebracht werden, so dass die Lichtgitterleiste 80 eine definierte Lage einnimmt.

## Patentansprüche

1. Sicherheitsprofilleiste, umfassend ein gummielastisches Dichtungsprofil (30, 32) mit einem gummielastischen Profilfuß (34, 36), der in Ausnehmungen und Halterungsvorsprüngen eines Türprofils befestigbar ist, wobei das gummielastische Dichtungsprofil eine erste Außenseite, eine zweite Außenseite sowie eine in Längenerstreckung des Dichtungsprofils verlaufenden Stirnseite aufweist und die Stirnseite dem gummielastischen Profilfuß (34, 36) gegenüberliegt,
wobei
im gummielastischen Dichtungsprofil (30, 32) eine Kammer (66, 68) zur Aufnahme einer Lichtgitterleiste, z. B. Sender- und/oder Empfängerleiste oder Reflektorleiste, (80) ausgespart ist und in der Stirnseite des gummielastischen Dichtungsprofils (30, 32) im Bereich der Kammer (66, 68) voneinander beabstandete Öffnungen (90, 92) für den Durchtritt von Lichtstrahlen von oder zu der Lichtgitterleiste (80) vorgesehen sind.

2. Sicherheitsprofilleiste nach Anspruch 1, **dadurch gekennzeichnet, dass** die Kammer (66, 68) einen Querschnitt entsprechend der Außenkontur der Lichtgitterleiste (80) hat.

3. Zweiflügelige Tür mit einer Sicherheitsprofilleiste nach Anspruch 1 oder 2, **dadurch gekennzeichnet, dass** in der Sicherheitsprofilleiste eines Türflügels eine Lichtgitterleiste, zB. Sender- und/oder Empfängerleiste oder Reflektorleiste, und in der Sicherheitsprofilleiste der anderen Tür die jeweils andere Leiste des Lichtgitters, zB. Empfänger, Reflektor- oder Senderleiste, untergebracht sind.

4. Tür mit einer Sicherheitsprofilleiste nach Anspruch 1 oder 2, **dadurch gekennzeichnet, dass** eine Lichtgitterleiste, zB. Sender- und/oder Empfängerleiste oder Reflektorleiste, im Dichtungsprofil (30, 32) der Tür und die jeweils andere Leiste des Lichtgitters, zB. Empfänger-, Reflektor- oder Senderleiste, im Portal angeordnet sind.

5. Sicherheitsprofilleiste nach einem der Ansprüche 1 oder 2, **dadurch gekennzeichnet, dass** die Lichtgitterleiste (80) bereichsweise im Dichtungsprofil (30, 32) vorgesehen ist.

6. Sicherheitsprofilleiste nach Anspruch 5, **dadurch gekennzeichnet, dass** sich die Lichtgitterleiste (80) über einen Teil der Längenerstreckung des Dichtungsprofils (30, 32) erstreckt.

7. Sicherheitsprofilleiste nach Anspruch 5 oder 6, **dadurch gekennzeichnet, dass** die Lichtgitterleiste (80) in mehrere Teilabschnitte aufgeteilt ist.

8. Sicherheitsprofilleiste nach einem der Ansprüche 5_bis 7, **dadurch gekennzeichnet, dass** die Kammer (66, 68) in dem Bereich/den Bereichen ohne Lichtgitterleiste (80) mit einem Kern, insbesondere Gummikern, gefüllt ist.

9. Sicherheitsprofilleiste nach einem der Ansprüche 1, 2 oder 5 bis 8, **dadurch gekennzeichnet, dass** die Öffnungen (90, 92) in der Stirnwand des Dichtungsprofils (30, 32) im Bereich der Lichtgitterleiste (80) vorgesehen sind.

10. Sicherheitsprofilleiste nach einem der Ansprüche 1, 2 oder 5 bis 9, **dadurch gekennzeichnet, dass** eine Seitenwand der Kammer (66, 68) zum Inneren des Dichtungsprofils (30, 32) durch flexible Lippen (70, 72; 74, 76) gebildet ist, die in das Innere der Kammer (66, 68) ragen.

11. Sicherheitsprofilleiste nach einem der Ansprüche 1, 2 oder 5 bis 10, **dadurch gekennzeichnet, dass** eine Lippe (40, 44) vor der Kammer (66, 68) außerhalb eines Strahlengangs der Lichtgitterleiste (80) angeordnet ist.

## Claims

1. Safety profile strip, comprising a rubberized elastic sealing profile (30, 32) with a rubberized elastic profiled foot (34, 46), which can be fastened in recesses and support projections of a door profile, wherein the rubberized elastic sealing profile has a first outer side, a second outer side and a front side which extends in the longitudinal extension of the sealing profile, and the front face is located opposite the rubberized elastic profiled foot (30, 32), wherein
a chamber (66, 68) for receiving a light grid strip (80), e.g. a transmitter and/or receiver strip or reflector strip, is cut out of the sealing profile (30, 32) and in the front side of the rubberized elastic sealing profile (30, 32) in the region of the chamber (66, 68), openings (90, 92) are provided, spaced apart from one another, for the passage of light beams from or to the light grid strip (80).

2. Safety profile strip according to Claim 1, **characterized in that** the chamber (66, 68) has a cross-section corresponding to the outer contour of the light grid strip (80).

3. Double-leaf door having a safety profile strip according to Claim 1 or 2,
**characterized in that** one light grid strip (e.g. transmitter and/or receiver strip or reflector strip) is accommodated in the safety profile strip of one door leaf and the respective other strip of the light grid (e.g. receiver, reflector or transmitter strip) is accommodated in the safety profile strip of the other door.

4. Door having a safety profile strip according to Claim 1 or 2,
**characterized in that** one light grid strip (e.g. transmitter and/or receiver strip or reflector strip) is arranged in the sealing profile (30, 32) of the door and the respective other strip of the light grid (e.g. receiver, reflector or transmitter strip) is arranged in the portal.

5. Safety profile strip according to any one of Claims 1 or 2,
**characterized in that** the light grid strip (80) is provided in some regions of the sealing profile (30, 32).

6. Safety profile strip according to Claim 5, **characterized in that** the light grid strip (80) extends over a portion of the longitudinal extension of the sealing profile (30, 32).

7. Safety profile strip according to Claim 5 or 6, **characterized in that** the light grid strip (80) is sub-divided into a plurality of sub-sections.

8. Safety profile strip according to any one of Claims 5 to 7,
**characterized in that** in the region/ regions without a light grid strip (80) the chamber (66, 68) is filled with a core, in particular a rubber core.

9. Safety profile strip according to any one of Claims 1, 2 or 5 to 8,
**characterized in that** the openings (90, 92) in the front wall of the sealing profile (30, 32) are provided in the region of the light grid strip (80).

10. Safety profile strip according to any one of Claims 1, 2 or 5 to 9,
**characterized in that** a side wall of the chamber (66, 68) to the inside of the sealing profile is formed by flexible lips (70, 72; 74, 76), which protrude into the interior of the chamber (66, 68).

11. Safety profile strip according to any one of Claims 1, 2 or 5 to 10,
**characterized in that** one lip (40, 44) in front of the chamber (66, 68) is arranged outside a beam path of the light grid strip (80).

## Revendications

1. Barrette profilée de sécurité, incluant un profil d'étanchéité (30, 32) présentant l'élasticité du caoutchouc avec un pied de profilé présentant l'élasticité du caoutchouc (34, 36), lequel est susceptible d'être fixé dans des évidements et des saillies de retenue d'un profilé de porte, dans lequel le profilé d'étanchéité présentant l'élasticité du caoutchouc présente un premier côté extérieur, un deuxième côté extérieur, ainsi qu'un côté frontal qui s'étend dans l'extension longitudinale du profilé d'étanchéité et qui est opposé au côté frontal du pied de profilé présentant l'élasticité du caoutchouc (34, 36), dans laquelle
dans le profilé d'étanchéité présentant l'élasticité du caoutchouc (30, 32) est ménagée une chambre (66, 68) pour la réception d'une barrette à grille lumineuse, par exemple une barrette émettrice et/ou une barrette réceptrice ou encore une barrette réfléchissante (80) et dans le côté frontal du profilé d'étanchéité présentant l'élasticité du caoutchouc (30, 32) il est prévu, dans la région de la chambre (66, 68), des ouvertures espacées les unes des autres (90, 92) pour la traversée de rayons lumineux depuis ou vers la barrette à grille lumineuse (80).

2. Barrette profilée de sécurité selon la revendication 1, **caractérisée en ce que** la chambre (66, 68) a une section transversale correspondant au contour extérieur de la barrette à grille lumineuse (80).

3. Porte à deux battants comprenant une barrette profilée de sécurité selon la revendication 1 ou 2, **caractérisée en ce qu'**une barrette à grille lumineuse, par exemple une barrette émettrice et/ou une barrette réceptrice ou encore une barrette réfléchissante, est logée dans la barrette profilée de sécurité d'un battant de porte et **en ce que** l'autre barrette respective de la grille lumineuse, par exemple la barrette réceptrice, la barrette réfléchissante ou la barrette émettrice, est logée dans la barrette profilée de sécurité de l'autre battant de porte.

4. Porte comprenant une barrette profilée de sécurité selon la revendication 1 ou 2, **caractérisée en ce qu'**une barrette à grille lumineuse, par exemple une barrette émettrice et/ou une barrette réceptrice ou encore une barrette réfléchissante, est agencée dans le profilé d'étanchéité (30, 32) de la porte, et **en ce que** l'autre barrette respective de la grille lumineuse, par exemple la barrette réceptrice, la barrette réfléchissante ou la barrette émettrice, est agencée dans le chambranle.

5. Barrette profilée de sécurité selon l'une des revendications 1 ou 2, **caractérisée en ce que** la barrette à grille lumineuse (80) est prévue de façon locale dans le profilé d'étanchéité (30, 32).

6. Barrette profilée de sécurité selon la revendication 5, **caractérisée en ce que** la barrette à grille lumineuse (80) s'étend sur une partie de l'extension longitudinale du profilé d'étanchéité (30, 32).

7. Barrette profilée de sécurité selon la revendication 5 ou 6, **caractérisée en ce que** la barrette à grille lumineuse (80) est subdivisé en plusieurs tronçons partiels.

8. Barrette profilée de sécurité selon l'une des revendications 5 à 7, **caractérisée en ce que**, dans la région/les régions dépourvue(s) de barrette(s) à grille lumineuse (80), la chambre (66, 68) est remplie avec un noyau, en particulier un noyau en caoutchouc.

9. Barrette profilée de sécurité selon l'une des revendications 1, 2 ou 5 à 8, **caractérisée en ce que** les ouvertures (90, 92) dans la paroi frontale du profilé d'étanchéité (30, 32) sont prévues dans la région de la barrette à grille lumineuse (80).

10. Barrette profilée de sécurité selon l'une des revendications 1, 2 ou 5 à 9, **caractérisée en ce qu'**une paroi latérale de la chambre (66, 68) vers l'intérieur du profilé d'étanchéité (30, 32) est formée par des lèvres flexibles (70, 72 ; 74, 76), qui s'étendent jusqu'à l'intérieur de la chambre (66, 68).

11. Barrette profilée de sécurité selon l'une des revendications 1, 2 ou 5 à 10, **caractérisée en ce qu'**une lèvre (40, 44) est agencée devant la chambre (66, 68) à l'extérieur d'un trajet des rayons de la barrette à grille lumineuse (80).
